# DEMANDE DE BREVET EUROPEEN

(11) **EP 0 692 545 A1**
(43) Date de publication de la demande: **17.01.1996**
(21) Numéro de dépôt: 95202156.6
(22) Date de dépôt: 22.10.1991
(51) Int. Cl.: C21D 1/76

(54) **Installation de traitement thermique**

(30) Priorité: 26.10.1990 FR 9013279
(62) Demande divisionnaire de: 91402801.4
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Rancon, Yannick, c/o American Air Liquide, Countryside, Illinois 60525 (US); Duchateau, Eric, Clarendon Hills, Illinois 60514 (US); Queille, Philippe, F-78220 Viroflay (FR)
(74) Mandataire: Le Moenner, Gabriel

(57) **Abrégé**

L'installation de traitement thermique comprend un four, une source d'azote impur, une source d'hydrocarbure, et un réacteur catalytique relié au sources et au four pour élaborer dans le four une atmosphère de traitement thermique de matériaux, le réacteur contenant un catalyseur à base de métal précieux.

## Description

La présente invention concerne les procédés d'élaboration d'une atmosphère de traitement thermique de métaux et, plus particulièrement "de protection", tels que le recuit, le revenu, la chauffe avant trempe, le recuit décarburant, le brasage ou le frittage, comprenant majoritairement de l'azote et des teneurs contrôlées en espèces réductrices ou carburantes et oxydantes ou décarburantes.

Dans ce type de traitements thermiques, il est nécessaire de protéger les pièces métalliques contre l'oxydation et, le cas échéant, contre la décarburation grâce à l'atmosphère protectrice présente dans le four.

Ces atmosphères protectrices sont fréquemment issues d'un générateur exothermique assurant une combustion incomplète d'un hydrocarbure avec de l'air. Généralement, on doit procéder à une épuration du gaz exothermique pour limiter le taux de CO₂ et réduire le point de rosée. L'atmosphère de traitement thermique peut être issue d'un générateur endothermique où un mélange d'air et d'hydrocarbure est envoyé sur un lit catalytique à une température supérieure à 1000°C. Pour limiter la forte proportion d'espèces carburantes, le gaz endothermique est dilué avec de l'azote pur produit par voie cryogénique.

On a également proposé d'élaborer des atmosphères de traitement thermique par réaction d'un mélange d'hydrocarbures et d'azote impur ayant une teneur résiduelle en oxygène supérieure à 0,5% à une température supérieure à 950°C avec un catalyseur à base de nickel. Ce procédé présente les inconvénients d'un coût énergétique significatif en raison de la température requise pour la réaction catalytique et de la formation de suies dont le nickel est un promoteur.

La présente invention a pour objet de proposer un procédé du type précédent pouvant être mis en oeuvre dans un large gamme de traitements thermiques de métaux, notamment à des températures inférieures à 800°C, avec des coûts de production réduits, offrant une grande souplesse d'utilisation et évitant la formation de suies.

Pour ce faire, selon une caractéristique de l'invention, la réaction entre l'azote impur et l'hydrocarbure est effectuée à une température comprise entre 400 et 900°C, typiquement entre 500 et 800°C avec un catalyseur à base de métal précieux, typiquement du platine ou du palladium sur un support alumine.

La présente invention a pour autre objet une installation de traitement thermique de métaux, du type comprenant un four, une source d'azote impur ayant une teneur résiduelle en oxygène supérieure à 0,5%_{,} une source d'hydrocarbure et un réacteur catalytique, caractérisé en ce que le réacteur contient un catalyseur à base de métal précieux.

Selon une caractéristique avantageuse de l'invention, l'azote impur est obtenu par la technique de séparation d'air in situ par perméation ou adsorption.

Selon l'invention, la réaction catalytique entre l'oxygène initialement contenu dans l'azote et l'hydrocarbure conduit majoritairement à la formation des espèces réductrices nécessaires à la protection, à savoir l'hydrogène et le monoxyde de carbone. Il se forme également, mais en quantité moindre, de la vapeur d'eau et du dioxyde de carbone. Si le rapport espèces réductrices/espèces oxydantes est suffisamment élevé, l'atmosphère engendrée protège le métal vis à vis de l'oxydation. Ce rapport dépend directement des teneurs en oxygène et en hydrocarbure dans le mélange initial, qui peuvent être facilement ajustées. Dans la pratique, les quantités d'hydrogène et de monoxyde de carbone obtenues par la réaction catalytique à une température entre 400 et 900°C sur un métal précieux sont comparables à celles issues des générateurs exothermiques et conviennent donc parfaitement aux traitements thermiques de protection. Les quantités d'espèces réductrices sont comprises entre 2 et 30% de l'atmosphère. Pour que les espèces réductrices résultant de la réaction catalytique représentent de 10 à 30% de l'atmosphère de traitement, la teneur en oxygène dans l'azote impur doit être relativement élevée, entre 1 et 7%, typiquement entre 3 et 7%, ce qui rend indiquée l'obtention de cet azote basse pureté par séparation d'air par perméation ou adsorption et rend ainsi le procédé selon l'invention tout à fait compétitif avec les générateurs exothermiques.

Dans le procédé selon l'invention, l'emploi d'un catalyseur à base de métal précieux permet une plus grande sélectivité vis-à-vis des produits obtenus (espèces réductrices majoritaires) et une cinétique réactionnelle plus grande, ce qui permet la mise oeuvre de la réaction à des températures relativement basses, notamment dès 400-500°C et permet d'effectuer la réaction dans un réacteur ex situ, à l'extérieur du four, ce qui offre une plus grande souplesse d'utilisation pour une gamme de fours et de type de traitements thermiques. La réaction peut bien sûr être menée, de façon classique, directement dans le four.

### Exemples d'application pour la mise en oeuvre de l'invention :

### Exemple 1 : recuit brillant et non décarburant de bobines de fils d'acier en four continu poussant ("pushing furnace") à 700°C

Le réacteur contenant le catalyseur est placé à l'extérieur du four de recuit et maintenu à une température de 660°C. Le catalyseur contient ici 0,5% (en poids) de platine sur un support alumine.

On envoie dans le réacteur un mélange d'hydrocarbure (ici du gaz naturel, à 5,5% en volume) et d'azote produit par perméation (94,5% en volume). La teneur en oxygène dans l'azote produit par perméation est de 3%.

L'atmosphère générée par le réacteur contient 15% d'espèces réductrices H₂ + CO, avec un point de rosée de -17°C.

Le fil d'acier recuit dans ces conditions ressort brillant et non décarburé.

Cette atmosphère peut avantageusement remplacer le gaz exothermique riche épuré habituellement utilisé.

### Exemple 2 : recuit brillant de tubes d'acier à basse teneur en carbone en four continu à rouleaux à 900°C

Le catalyseur, identique à celui de l'exemple précédent, est disposé dans un réacteur placé à l'extérieur du four de recuit et maintenu à une température de 640°C.

On envoie dans le réacteur un mélange d'hydrocarbure (gaz naturel, 8,5% en volume) et d'azote produit par perméation (91,5% en volume). La teneur en oxygène dans l'azote de perméation est de 5%.

L'atmosphère générée par le réacteur contient 20% d'espèces réductrices H₂ + CO.

Le tube d'acier recuit dans ces conditions ressort avec un état de surface brillant.

Cette atmosphère peut avantageusement remplacer le gaz exothermique riche habituellement utilisé.

### Exemple 3 : recuit de bobines de tôles d'acier en four à cloche à 700°C

Le réacteur contenant le catalyseur est placé à l'extérieur du four, ce qui permet d'alimenter plusieurs fours cloches en parallèle, et maintenu à une température de 500°C. Le catalyseur contient ici 0,5% (en poids) de palladium sur support alumine.

On envoie dans le réacteur un mélange d'hydrocarbure (gaz naturel, 2% en volume) et d'azote produit par adsorption (98% en volume). La teneur en oxygène dans l'azote d'adsorption est de 1%.

L'atmosphère générée contient de 4 à 5% de H₂ + CO, ce qui est compatible avec les exigences de sécurité sur ce type de four (mélange non inflammable à l'air). La proportion de H₂O + CO₂ est suffisamment faible pour que soit assurée la protection de la tôle durant le recuit.

Cette atmosphère peut avantageusement remplacer le gaz exothermique pauvre épuré actuellement utilisé.

### Exemple 4 : recuit décarburant des tôles magnétiques en four continu poussant à 800°C

Le réacteur contenant le catalyseur est placé à l'intérieur du four, en zone chaude. Il fonctionné donc à une température proche de celle du four (800°C). Le catalyseur utilisé contient ici 0,5% (en poids) de platine sur support alumine.

On envoie dans le réacteur un mélange d'hydrocarbure (gaz naturel, 10% en volume) et d'azote produit par perméation (90% en volume). La teneur en oxygène dans l'azote de perméation est de 7%.

L'atmosphère générée correspond à la composition d'une atmosphère exothermique riche non épurée : 20% d'espèces réductrices et un point de rosée d'environ + 20°C afin de décarburer la tôle.

## Revendications

1. Installation de traitement thermique comprenant : un four, une source d'azote impur ayant une teneur résiduelle en oxygène supérieure à 0,5%, une source d'hydrocarbure et un réacteur catalytique relié aux sources et au four pour élaborer dans le four une atmosphère de traitement thermique de matériaux, caractérisée en ce que le réacteur contient un catalyseur à base de métal précieux.

2. Installation selon la revendication 1, caractérisée en ce que la source d'azote impur est un séparateur d'air par perméation ou adsorption.

3. Installation selon l'une des revendications 1 à 2, caractérisée en ce que le catalyseur est à base de platine.

4. Installation selon l'une des revendications 1 à 2, caractérisée en ce que la catalyseur est à base de palladium.

5. Installation selon l'une des revendications 1 à 4, caractérisée en ce que le réacteur est placé à l'intérieur du four.

6. Installation selon l'une des revendications 1 à 4, caractérisée en ce que le réacteur est placé à l'extérieur du four.

7. Installation selon l'une des revendications 1 à 6, caractérisée en ce qu'elle comprend des moyens de maintien de la température du réacteur dans la gamme comprise entre 400°C et 9OO°C.
